# EUROPÄISCHE PATENTSCHRIFT

(11) **EP 1 012 027 B1**
(45) Veröffentlichungstag und Bekanntmachung des Hinweises auf die Patenterteilung: **28.11.2001**
(21) Anmeldenummer: 98951363.5
(22) Anmeldetag: 09.09.1998
(51) Int. Cl.: B62D 5/083

(54) **VERFAHREN ZUM MONTIEREN EINES LENKVENTILS MIT EINER ZENTRIEREINHEIT**
METHOD FOR MOUNTING A STEERING VALVE WITH A CENTRING UNIT
PROCEDE DE MONTAGE D'UNE SOUPAPE DE BRAQUAGE AVEC UNE UNITE DE CENTRAGE

(30) Priorität: 13.09.1997 DE 19740352
(43) Veröffentlichungstag der Anmeldung: 28.06.2000
(73) Patentinhaber: ZF FRIEDRICHSHAFEN Aktiengesellschaft, 88038 Friedrichshafen (DE)
(72) Erfinder: HOFMANN, Hans, D-73563 Mögglingen (DE); KRUTTSCHNITT, Andreas, D-89522 Heidenheim (DE); WALTER, Wolfgang, D-73529 Schwäbisch Gmünd (DE)
(74) Vertreter: Wiechmann, Manfred
(86) Internationale Anmeldenummer: EP9805700
(87) Internationale Veröffentlichungsnummer: WO9914098

(56) Entgegenhaltungen:
- EP-A- 0 468 659
- DE-A- 4 220 624

## Beschreibung

Die Erfindung betrifft ein Verfahren zum Montieren eines Lenkventils mit einer Zentriereinheit für hydraulische Hilfskraftlenkungen, insbesondere für Kraftfahrzeuge, nach dem Oberbegriff des Anspruches 1. Dabei enthält das Lenkventil ein erstes Ventilelement und ein zweites Ventilelement, die relativ zueinander verdrehbar sind. Die Zentriereinheit enthält ein erstes Zentrierelement und ein zweites Zentrierelement, die relativ zueinander verdrehbar und in axialer Richtung relativ zueinander verschiebbar sind. Von den beiden Zentrierelementen ist wenigstens eines durch eine Feder in Richtung auf das andere Zentrierelement beaufschlagbar. Die Zentrierelemente weisen einander zugeordnete, im wesentlichen radial ausgerichtete Nuten auf, zwischen denen Wälzkörper eingesetzt werden können.

Ein Lenkventil mit einer Zentriereinrichtung, auf das sich das oben beschriebene Verfahren bezieht, ist bekannt aus der EP-B1-646 080. Bei derartigen Lenkventilen müssen die beiden Ventilelemente und die beiden Zentrierelemente relativ zueinander sehr genau ausgerichtet und fixiert werden, so daß die mechanische Mitte der Zentriereinheit mit der hydraulischen Mitte des Lenkventils übereinstimmt.

Bei dem bekannten Lenkventil mit einer Zentriereinheit ist das zweite Ventilelement mit dem zweiten Zentrierelement einteilig ausgebildet. Das Ausrichten der mechanischen Mitte der Zentriereinheit zu der hydraulischen Mitte der Ventilelemente erfolgt durch Ausrichten des ersten Zentrierelementes relativ zu dem ersten Ventilelement. Hierzu ist das erste Zentrierelement relativ zu der verdrehsicheren Axialsicherung zunächst verdrehbar ausgeführt. Nach dem Ausrichten erfolgt das verdrehsichere Verbinden der Teile. Das Verbinden der Teile durch ein Schweißverfahren kann jedoch zu einer unerwünschten örtlichen Erwärmung führen.

Es wurde deshalb bereits vorgeschlagen, das zweite Zentrierelement und das zweite Ventilelement getrennt voneinander herzustellen und beim Zusammenbauen miteinander zu verbinden. Dazu wurde vorgeschlagen, das zweite Ventilelement nach dem Aufsetzen und Ausrichten des zweiten Zentrierelementes durch Verformen eines an dem zweiten Ventilelement ausgebildeten ringförmigen Flanschabschnittes mit dem zweiten Zentrierelement zu verbinden. Dabei besteht jedoch die Gefahr, daß das zweite Ventilelement nicht nur im Bereich seines ringförmigen Flanschabschnittes, sondern auch im Bereich seines Außenumfanges und im Bereich seiner Steuernuten verformt wird. Außerdem müssen während einer solchen Montage nach dem richtigen Positionieren des ersten Zentrierelementes relativ zu dem ersten Ventilelement die beiden Zentrierelemente relativ zueinander ausgerichtet werden. Dabei beeinträchtigt die Reibung zwischen dem zweiten Zentrierelement und dem zweiten Ventilelement den Einstellvorgang. Eine Kombination aus Zusammenbauen, Positionieren und Ausrichten und Befestigen durch Verformung von Bauteilen erfordert im allgemeinen komplizierte Vorrichtungen.

Der Erfindung liegt die Aufgabe zugrunde, ein exaktes und kostengünstiges Montageverfahren anzugeben.

Diese Aufgabe wird durch das im Anspruch 1 gekennzeichnete Verfahren gelöst. Das Verfahren enthält folgende Schritte:
- Die beiden Ventilelemente des Lenkventils werden zunächst ohne Zentriereinheit durch ein hydraulisches oder pneumatisches Druckmittel auf ihre Mittenposition ausgerichtet und über eine Drehstabfeder in dieser Position miteinander verbunden.
- Die beiden Zentrierelemente der Zentriereinheit werden getrennt von dem Lenkventil in einer Montagevorrichtung vormontiert und zusammen mit den Wälzkörpern auf ihre mechanische Zentriermitte ausgerichtet, z. B. durch Aufbringen einer Axialkraft.
- Die beiden auf ihre Mittenposition ausgerichteten Ventilelemente des Lenkventils werden mit den beiden auf ihre mechanische Zentriermitte ausgerichteten Zentrierelementen der Zentriereinheit verbunden. Dazu wird zunächst das erste Zentrierelement über eine verdrehsichere Axialführung relativ zu dem ersten Ventilelement ausgerichtet und drehfest, jedoch axial verschiebbar, mit diesem verbunden. Danach wird durch axiales Verschieben der gesamten Zentriereinheit längs der verdrehsicheren Axialführung das zweite Zentrierelement mit dem zweiten Ventilelement über einen Längspreßverband verbunden.

Bei diesem Verfahren entstehen beim Ausrichten der Zentrierelemente zueinander keine Reaktionsmomente der Zentriereinheit auf das Lenkventil, die die Zentrierung der Ventilelemente beeinflussen könnten.

Vorteilhafte und zweckmäßige Ausgestaltungen der Erfindung sind in den Unteransprüche angegeben. So dient es zur Erleichterung der Montage, wenn das zweite Zentrierelement eine radial außen gelegene Umfangsnut besitzt, in die ein Montagewerkzeug eingreifen kann. Mit gleicher Wirkung kann die Umfangsnut ersetzt werden durch einen Montagebund. Die Umfangsnut bzw. der Montagebund werden sowohl beim Ausrichten der Teile als auch beim Montieren bzw. Aufpressen verwendet. Dabei ist es besonders vorteilhaft, wenn die Umfangsnut an ihrer von dem zweiten Ventilelement abgewandten Wandung einen Einführkonus zum erleichterten Einführen des Montagewerkzeugs und wenn deren dem zweiten Ventilelement zugewandte Wandung eine im wesentlichen ebene Fläche für eine sichere Abstützung des Montagewerkzeugs aufweist. Um jeglichen Einfluß der Montage der Preßverbindung auf den Dichtspalt zwischen den beiden Ventilelementen auszuschließen, kann zwischen dem ersten und dem zweiten Ventilelement im axialen Bereich des zweiten Zentrierelementes ein Wälzlager, beispielsweise in der Form eines Nadellagers, angeordnet sein.

Im folgenden wird die Erfindung anhand zweier in der Zeichnung dargestellter Ausführungsbeispiele näher erläutert. Es zeigen
- Fig. 1: einen Längsschnitt durch ein Lenkventil mit einer Zentriereinheit;
- Fig. 2: eine Teilansicht in Richtung des Pfeiles II in Fig. 1;
- Fig. 3: einen Teilschnitt gemäß dem Ausschnitt III in Fig 1 in einem zweiten Ausführungsbeispiel

Die Erfindung wird am Beispiel einer Zahnstangen-Hilfskraftlenkung erläutert. Mit gleicher Wirkung kann die Erfindung jedoch auch auf Kugelmutter-Hilfskraftlenkungen angewendet werden.

Ein Lenkventil 1 in der Form eines Drehschieberventils ist in einem Ventilgehäuse 2 einer Hilfskraftlenkung 3 enthalten. Das Lenkventil 1 enthält ein erstes Ventilelement 4 in der Form eines Drehschiebers, der mit einer Eingangswelle 5 fest verbunden ist. Das erste Ventilelement 4 und die Eingangswelle 5 sind zusammen über Wälzlager 6 und 7 in einem zweiten Ventilelement 8 drehbar geführt. Die Wälzlager 6 und 7 sind zweckmäßigerweise als Nadellager ausgebildet. Das zweite Ventilelement 8 ist als Ventilbuchse ausgeführt und seinerseits in dem Ventilgehäuse 2 drehbar gelagert. Das zweite Ventilelement 8 ist außerdem , beispielsweise über einen Stift 9, mit einer Ausgangswelle 10 fest verbunden. Die Ausgangswelle 10 trägt ein Ritzel 11, das Teil eines ansonsten nicht näher dargestellten Zahnstangen-Lenkgetriebes der Hilfskraftlenkung 3 ist. Wird das Lenkventil 1 nicht in einer Zahnstangen-Hilfskraftlenkung, sondern in einer Kugelmutter-Hilfskraftlenkung verwendet, so ist das Ritzel 11 ersetzt durch eine Lenkschnecke.

Die Eingangswelle 5 und die Ausgangswelle 10 sind miteinander durch eine Drehstabfeder 12 verbunden, so daß zwischen der Eingangswelle 5 und der Ausgangswelle 10 und damit zwischen dem ersten Ventilelement 4 und dem zweiten Ventilelement 8 eine begrenzte Verdrehung möglich ist. Durch diese Verdrehung zwischen den beiden Ventilelementen wird das von einer Servopumpe 13 geförderte Druckmittel dem jeweiligen Arbeitsraum eines Servomotors 14 zugeführt und von dem entsprechend anderen Arbeitsraum zurück zu einem Druckmittelbehälter 15 geleitet.

Eine Zentriereinheit 16, die gleichzeitig zur Mittenzentrierung des Lenkventils und als Rückwirkungseinrichtung dient, unterstützt die Drehstabfeder 12 in ihrer Ventilrückstellung. Die Zentriereinheit 16 enthält zwei Zentrierelemente 17 und 18. Das erste Zentrierelement 17 ist über eine verdrehsichere Axialführung 20 mit der Eingangswelle 5 und damit mit dem ersten Ventilelement 4 drehfest, jedoch axial verschiebbar verbunden. Die Axialführung 20 weist an dem ersten Ventilelement 4 und an dem ersten Zentrierelement 17 miteinander zusammenwirkende Längsrillen 21 bzw. 22 auf, zwischen denen Kugeln 23 eingesetzt sind, die zweckmäßigerweise in einem Kugelkäfig gehalten werden. Das zweite Zentrierelement 18 ist durch einen Preßverband drehfest und axial unverschiebbar mit dem zweiten Ventilelement 8 verbunden. Für den Preßverband ist an dem zweiten Ventilelement 8 ein ringförmiger Absatz ausgearbeitet mit einer zylindrischen Außenfläche. Das zweite Zentrierelement 18 besitzt eine zylindrische Innenfläche. Die beiden zylindrischen Flächen des zweiten Ventilelementes 8 und des zweiten Zentrierelementes 18 sind durch einen Preßsitz unverschiebbar und unverdrehbar miteinander verbunden.

Jedes der beiden Zentrierelemente 17 und 18 weist wenigstens eine Nut 24 bzw. 25 auf mit V-förmig zueinander geneigten Schrägflächen, einem kreisbogenförmigen oder ähnlich geformten Querschnitt. Die Nuten 24 und 25 sind im wesentlichen in radialer Richtung ausgerichtet. Zwischen den Nuten 24 und 25 ist ein Wälzkörper 26, beispielsweise eine Kugel, gehalten. Der Wälzkörper 26 ist zweckmäßigerweise in einem Käfig 27 geführt. Der Käfig 27 weist zur Erleichterung der Montage Haltenasen 27A auf, die an einem der Zentrierelemente 17, 18 einrasten.

Die beiden Zentrierelemente 17 und 18 werden durch eine Feder 28 zusammengedrückt. Die Feder 28 ist in dem Ausführungsbeispiel als Schraubenfeder ausgebildet, die jedoch ersetzt werden kann durch einen Metallfaltenbalg oder eine andere in Axialrichtung elastische Feder, beispielsweise ein Paket von Blattfedern. Die Feder 28 stützt sich an ihrem freien Ende an einem Anschlag 29 ab, der an dem ersten Ventilelement 4 beispielsweise durch einen Sprengring und eine Anschlagscheibe gebildet ist.

In dem Ausführungsbeispiel ist das erste Zentrierelement 17 einteilig mit einem Rückwirkungskolben 30 ausgebildet. Das Zentrierelement 17 und der Rückwirkungskolben 30 können jedoch auch geteilt hergestellt sein und dann miteinander verbunden sein. Das Vorhandensein eines Rückwirkungskolbens ist nicht erfindungswesentlich. Wird jedoch der Rückwirkungskolben 30 dichtend auf der Eingangswelle 5 und in einer Ventilbohrung 31 des Ventilgehäuses 2 geführt, so grenzt der Rückwirkungskolben einen Rückwirkungsraum 32 ab, dem ein lenkkraftabhängiger Servodruck über eine Leitung 33 zugeführt werden kann. Der Servodruck kann in bekannter Weise durch einen elektro-hydraulischen Wandler 34 in Abhängigkeit von der Fahrgeschwindigkeit und/oder anderen Parametern beeinflußt werden.

In der Ventil-Neutralstellung befinden sich die beiden Ventilelemente 4 und 8 relativ zueinander in einer hydraulischen Mittenposition. Dabei sind die beiden Arbeitsräume des Servomotors 14 druckgleich. Aus dieser hydraulischen Mittenposition heraus lassen sich die beiden Ventilelemente 4 und 8 relativ zueinander in beide Drehrichtungen verdrehen. Dabei ergibt sich eine von dem Verdrehwinkel abhängige Druckerhöhung in einem der Drehrichtung zugeordneten Arbeitsraum des Servomotors 14. Die Drehstabfeder 12 und die parallel geschaltete Zentriereinheit 16 richten gemeinsam die beiden Ventilelemente 4 und 8 auf deren hydraulische Mittenposition aus. Die Zentriereinheit 16 wird durch die auf ihr erstes Zentrierelement 17 wirkenden Axialkräfte auf ihre mechanische Zentriermitte ausgerichtet. Dabei wirken die nahezu konstante Axialkraft der Feder 28 und die veränderbare hydraulische Axialkraft aus dem Rückwirkungsraum 32 unterstützend zu der Kraft der Drehstabfeder 12.

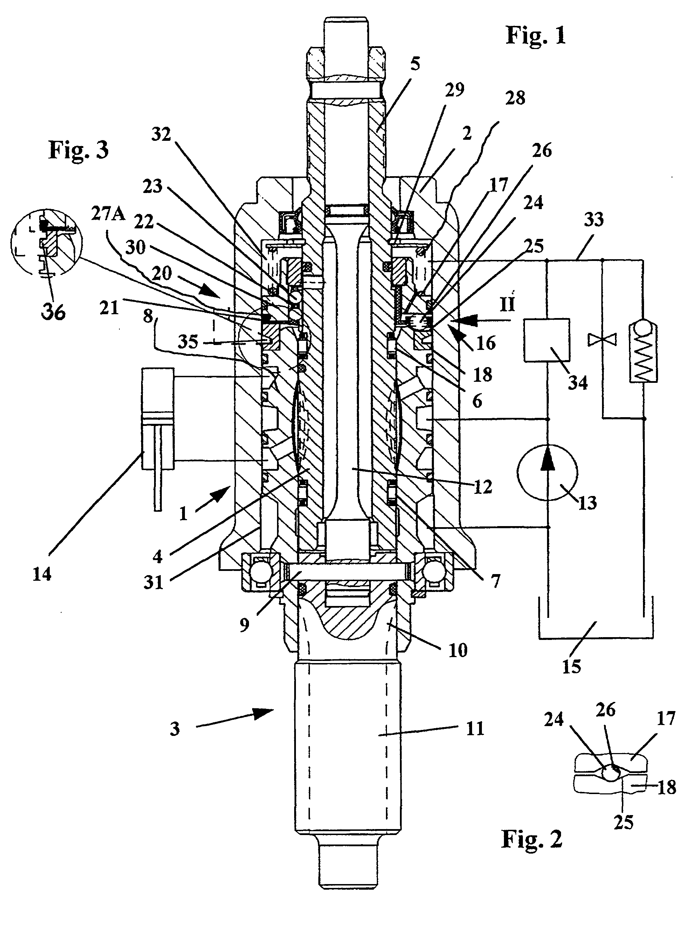

Das zweite Zentrierelement 18 weist eine radial außen gelegene Umfangsnut 35 auf. Die Umfangsnut 35 hat an ihrer von dem zweiten Ventilelement 8 abgewandten Wandung einen Einführkonus zum erleichterten Einführen eines Montagewerkzeugs. An ihrer anderen, dem zweiten Ventilelement 8 abgewandten Wandung besitzt die Umfangsnut 35 eine im wesentlichen ebene Fläche für eine sichere Abstützung des Montagewerkzeugs. Alternativ zu der Umfangsnut 35 kann ein Montagebund 36 vorgesehen werden, wie er in Fig. 3 dargestellt ist.

Im folgenden wird das Verfahren zum Montieren des Lenkventils 1 mit der Zentriereinheit 16 mit seinen einzelnen Schritten beschrieben: Zunächst werden die beiden Ventilelemente 4 und 8 ohne die Zentriereinheit 16 durch ein Druckmittel auf ihre Mittenposition ausgerichtet und über die Drehstabfeder 12 in dieser Position miteinander verbunden. Die Ausrichtung kann dabei mit einem hydraulischen oder pneumatischen Druckmittel erfolgen.

Die beiden Zentrierelemente 17 und 18 der Zentriereinheit 16 werden getrennt von dem Lenkventil 1 in einer Montagevorrichtung vormontiert und zusammen mit den Wälzkörpern 26 auf ihre mechanische Zentriermitte ausgerichtet. Dieses Ausrichten erfolgt beispielsweise durch Aufbringen einer Axialkraft. Dazu kann die Feder 28 verwendet werden.

Danach werden die auf ihre Mittenposition ausgerichteten Ventilelemente 4 und 8 mit den beiden auf ihre mechanische Zentriermitte ausgerichteten Zentrierelementen 17 und 18 der Zentriereinheit in zwei Schritten verbunden. Die vormontierte Zentriereinheit 16 wird zunächst auf das erste Ventilelement 4 aufgeschoben und mit ihrem ersten Zentrierelement 17 durch die Axialführung 20 relativ zu dem ersten Ventilelement 4 ausgerichtet. Wesentlich ist, daß die Axialführung 20 sowohl zur Montage als auch zum Betrieb des Lenkventils 1 mit der Zentriereinrichtung 16 dient. Dadurch ist die Zentriereinheit 16 bereits mit dem ersten Ventilelement 4 drehfest, jedoch axial verschiebbar, verbunden. Wird nun die vormontierte Zentriereinheit 16 weiter auf dem ersten Ventilelement 4 in Richtung auf das zweite Ventilelement 8 verschoben, so wird die Zentriereinheit 16 mit ihrem zweiten Zentrierelement 18 auf das zweite Ventilelement 8 aufgeschoben, so daß das zweite Zentrierelement 18 mit dem zweiten Ventilelement 8 über einen Längspreßverband verbunden wird.

Die Umfangsnut 35 bzw. der Montagebund 36 dienen bereits bei der Vormontage zum Abstützen beim Ausrichten der Teile.

### Bezugszeichen

- 1: Lenkventil
- 2: Ventilgehäuse
- 3: Hilfskraftlenkung
- 4: erstes Ventilelement
- 5: Eingangswelle
- 6: Wälzlager
- 7: Wälzlager
- 8: zweites Ventilelement
- 9: Stift
- 10: Ausgangswelle
- 11: Ritzel
- 12: Drehstabfeder
- 13: Servopumpe
- 14: Servomotor
- 15: Druckmittelbehälter
- 16: Zentriereinheit
- 17: erstes Zentrierelement
- 18: zweites Zentrierelement
- 19: -
- 20: Axialführung
- 21: Längsrille
- 22: Längsrille
- 23: Kugel
- 24: Nut
- 25: Nut
- 26: Wälzkörper
- 27: Käfig
- 27A: Haltenase
- 28: Feder
- 29: Anschlag
- 29: -
- 30: Rückwirkungskolben
- 31: Ventilbohrung
- 32: Rückwirkungsraum
- 33: Leitung
- 34: Wandler
- 35: Umfangsnut
- 36: Montagebund

## Patentansprüche

1. Verfahren zum Montieren eines Lenkventils (1) mit einer Zentriereinheit (15) für hydraulische Hilfskraftlenkungen, insbesondere für Kraftfahrzeuge,
- wobei das Lenkventil (1) ein erstes Ventilelement (4) und ein zweites Ventilelement (8) enthält, die relativ zueinander verdrehbar sind und
- wobei die Zentriereinheit (16) ein erstes Zentrierelement (17) und ein zweites Zentrierelement (18) enthält, die zu dem jeweiligen Ventilelement (4, 8) drehfest und - gemeinsam mit den Ventilelementen (4, 8)-relativ zueinander verdrehbar und in axialer Richtung relativ zueinander verschiebbar sind und von denen wenigstens ein Zentrierelement (17) durch die Kraft einer Feder (28) in Richtung auf das andere Zencrierelement (18) beaufschlagbar ist,
- wobei die Zentrierelemente (17, 18) einander zugeordnete, im wesentlichen radial ausgerichtete Nuten (24, 25) aufweisen, zwischen denen Wälzkörper (26) eingesetzt werden können,
**gekennzeichnet durch** folgende Schritte:
- die beiden Ventilelemente (4, 8) des Lenkventils (1) werden zunächst ohne Zentriereinheit (16) **durch** ein Druckmittel auf ihre Mittenposition ausgerichtet und über eine Drehstabfeder (12) in dieser Position verbunden,
- die beiden Zentrierelemente (17, 18) der Zentriereinheit (16) werden getrennt von dem Lenkventil (1) in einer Montagevorrichtung vormontiert und zusammen mit den Wälzkorpern (26) auf ihre mechanische Zentriermitte ausgerichtet,
- die beiden auf ihre Mittenposition ausgerichteten Ventilelemente (4, 8) des Lenkventils (1) werden mit den beiden auf ihre mechanische Zentriermitte ausgerichteten Zentrierelementen (17, 18) der Zentriereinheit (16) verbunden, indem
- zunächst das erste Zentrierelement (17) über eine verdrehsichere Axialführung (20) relativ zu dem ersten Ventilelement (4) ausgerichtet und drehfest, jedoch axial verschiebbar, mit diesem verbunden wird und
- danach **durch** axiales Verschieben der gesamten Zentriereinheit (16) längs der verdrehsicheren Axialführung (20) das zweite Zentrierelement (18) mit dem zweiten Ventilelement (8) über einen Längspreßverband verbunden wird.

2. Lenkventil mit einer Zentriereinheit, das durch das im Anspruch 1 definierte Verfahren montiert wurde, **dadurch**
**gekennzeichnet, daß** das zweite Zentrierelement (18) eine radial außen gelegene Umfangsnut (35) zum Einführen eines Montagewerkzeugs besitzt.

3. Lenkventil mit einer Zentriereinheit, das durch das im Anspruch 1 definierte verfahren montiert wurde, **dadurch**
**gekennzeichnet, daß** das zweite Zentrierelement (18) einen radial außen gelegenen Montagebund (36) besitzt.

4. Lenkventil nach Anspruch 2, **dadurch gekennzeichnet, daß** die Umfangsnut (35) an ihrer von dem zweiten Ventilelement (8) abgewandten Wandung einen Einführkonus zum erleichterten Einführen eines Montagewerkzeugs und daß deren dem zweiten Ventilelement (8) zugewandte Wandung eine im wesentlichen ebene Fläche für eine sichere Abatützung des Montagewerkzeugs aufweist.

5. Lenkventil nach einen der Ansprüche 2 bis 4, **dadurch gekennzeichnet, daß** zwischen dem ersten und dem zweiten Ventilelement (4, 8) im axialen Bereich des zweiten Zentrierelementes (18) ein Wälzlager (6) angeordnet ist.

6. Lenkventil nach Anspruch 5, , **dadurch gekennzeichnet, daß** das Wälzlager (6) ein Nadellager ist.

7. Lenkventil nach einem der Ansprüche 2 bis 6, **dadurch gekennzeichnet, daß** die verdrehsichere Axialführung (20) sowohl zur Montage als auch zum Betrieb des Lenkventils (1) mit der Zentriereinheit (16) dient.

8. Lenkventil nach einem der Ansprüche 2 bis 6, **dadurch gekennzeichnet, daß** die Wälzkörper (26) in einem Käfig (27) gehalten werden.

9. Lenkventil nach Anspruch 8, , **dadurch gekennzeichnet, daß** der Käfig (27) Haltenasen (27A) aufweist, mit denen er an einem der Zentrierelemente (17, 18) eingerastet werden kann.

## Claims

1. Method for assembling a steering valve (1) having a centring unit (16) for hydraulic power-assisted steering systems, in particular for motor vehicles,
- the steering valve (1) containing a first valve element (4) and a second valve element (8) which are rotatable relative to one another, and
- the centring unit (16) containing a first centring element (17) and a second centring element (18) which are rotationally fixed relative to the respective valve element (4, 8) and, jointly with the valve elements (4, 8), are rotatable relative to one another and displaceable in the axial direction relative to one another and of which at least one centring element (17) is capable of being loaded by the force of a spring (28) in the direction of the other centring element (18),
- the centring elements (17, 18) having essentially radially oriented grooves (24, 25) which are assigned to one another and between which rolling bodies (26) can be inserted,
**characterized by** the following steps:
- the two valve elements (4, 8) of the steering valve (1) are first aligned with their middle position, without the centring unit (16), by means of a pressure medium and are connected in this position via a torsion-bar spring (12),
- the two centring elements (17, 18) of the centring unit (16) are preassembled, separately from the steering valve (1), in an assembly device and, together with the rolling bodies (26), are aligned with their mechanical centring middle,
- the two valve elements (4, 8) of the steering valve (1) which are aligned with their middle position are connected to the two centring elements (17, 18) of the centring unit (16) which are aligned with their mechanical centring middle, in that,
- first, the first centring element (17) is oriented relative to the first valve element (4) via a non-rotational axial guide (20) and is connected to the latter in a rotationally fixed, but axially displaceable, manner, and,
- thereafter, as a result of the axial displacement of the entire centring unit (16) along the non-rotational axial guide (20), the second centring element (18) is connected to the second valve element (8) via a longitudinal press fit.

2. Steering valve having a centring unit, said steering valve having been assembled by means of the method defined in Claim 1, **characterized in that** the second centring element (18) posseses a radially outer circumferential groove (35) for the introduction of an assembly tool.

3. Steering valve having a centring unit, said steering valve having been assembled by means of the method defined in Claim 1, **characterized in that** the second centring element (18) possesses a radially outer assembly collar (36).

4. Steering valve according to Claim 2, **characterized in that** the circumferential groove (35) has, on its wall facing away from the second valve element (8), an introduction cone for the facilitated introduction of an assembly tool, and **in that** that wall of said circumferential groove which faces the second valve element (8) has an essentially plane face for a reliable support of the assembly tool.

5. Steering valve according to one of Claims 2 to 4,
**characterized in that** a rolling bearing (6) is arranged between the first and the second valve element (4, 8) in the axial region of the second centring element (18).

6. Steering valve according to Claim 5, **characterized in that** the rolling bearing (6) is a needle bearing.

7. Steering valve according to one of Claims 2 to 6,
**characterized in that** the non-rotational axial guide (20) serves both for assembling and for operating the steering valve (1) having the centring unit (16).

8. Steering valve according to one of Claims 2 to 6,
**characterized in that** the rolling bodies (26) are held in a cage (27).

9. Steering valve according to Claim 8, **characterized in that** the cage (27) has holding noses (27A), by means of which it can be engaged on one of the centring elements (17, 18).

## Revendications

1. Procédé pour le montage d'une soupape de direction (1) avec une unité de centrage (16) pour des directions assistées hydrauliques, en particulier pour des véhicules automobiles,
- dans lequel la soupape de direction (1) comporte un premier élément de soupape (4) et un deuxième élément de soupape (8), qui peuvent tourner l'un par rapport à l'autre, et
- dans lequel l'unité de centrage (16) comporte un premier élément de centrage (17) et un deuxième élément de centrage (18), qui sont calés en rotation par rapport à l'élément de soupape respectif (4, 8) et peuvent tourner l'un par rapport à l'autre - en même temps que les éléments de soupape (4, 8) - et qui peuvent être déplacés l'un par rapport à l'autre en direction axiale et dont au moins un élément de centrage (17) peut être poussé en direction de l'autre élément de centrage (18) par la force d'un ressort (28),
- dans lequel les éléments de centrage (17, 18) présentent des rainures (24, 25) associées l'une à l'autre orientées essentiellement en direction radiale, entre lesquelles des corps de roulement (26) peuvent être insérés,
**caractérisé par** les étapes suivantes:
- les deux éléments de soupape (4, 8) de la soupape de direction (1) sont d'abord alignés à leur position moyenne sans unité de centrage (16) par un agent sous pression et assemblés dans cette position par un ressort à barre de torsion (12),
- les deux éléments de centrage (17, 18) de l'unité de centrage (16) sont prémontés séparément de la soupape de direction (1) dans un dispositif de montage et alignés sur leur point de centrage mécanique en même temps que les corps de roulement (26),
- les deux éléments de soupape (4, 8) de la soupape de direction (1) alignés à leur position moyenne sont assemblés avec les deux éléments de centrage (17, 18) de l'unité de centrage (16) alignés sur leur point de centrage mécanique, par le fait que
- d'abord le premier élément de centrage (17) est aligné par rapport au premier élément de soupape (4) par un guidage axial non rotatif (20) et assemblé à celui-ci d'une manière calée en rotation mais cependant mobile en direction axiale, et
- ensuite, par un déplacement axial de l'ensemble de l'unité de centrage (16) le long du guidage axial non rotatif (20), le deuxième élément de centrage (18) est assemblé avec le deuxième élément de soupape (8) par un joint longitudinal à ajustement serré.

2. Soupape de direction avec une unité de centrage, qui a été montée par le procédé défini dans la revendication 1, **caractérisée en ce que** le deuxième élément de centrage (18) possède une rainure périphérique (35) située radialement à l'extérieur pour l'introduction d'un outil de montage.

3. Soupape de direction avec une unité de centrage, qui a été montée par le procédé défini dans la revendication 1, **caractérisée en ce que** le deuxième élément de centrage (18) possède un collet de montage (36) situé radialement à l'extérieur.

4. Soupape de direction suivant la revendication 2, **caractérisée en ce que** la rainure périphérique (35) présente sur sa paroi située à l'opposé du deuxième élément de soupape (8) un cône d'entrée pour faciliter l'introduction d'un outil de montage et **en ce que**. sa paroi tournée vers le deuxième élément de soupape (8) présente une face sensiblement plane pour un appui sûr de l'outil de montage.

5. Soupape de direction suivant l'une quelconque des revendications 2 à 4, **caractérisée en ce qu'**un palier de roulement (6) est disposé entre le premier et le deuxième élément de soupape (4, 8) dans la région axiale du deuxième élément de centrage (18).

6. Soupape de direction suivant la revendication 5, **caractérisée en ce que** le palier de roulement (6) est un roulement à aiguilles.

7. Soupape de direction suivant l'une quelconque des revendications 2 à 6, **caractérisée en ce que** le guidage axial non rotatif (20) sert aussi bien pour le montage que pour le fonctionnement de la soupape de direction (1) avec l'unité de centrage (16).

8. Soupape de direction suivant l'une quelconque des revendications 2 à 6, **caractérisée en ce que** les corps de roulement (26) sont maintenus dans une cage (27).

9. Soupape de direction suivant la revendication 8, **caractérisée en ce que** la cage (27) présente des becs de blocage (27A), avec lesquels elle peut être verrouillée sur un des éléments de centrage (17, 18).
